# EUROPEAN PATENT APPLICATION

(11) **EP 4 084 263 A1**
(43) Date of publication of application: **02.11.2022**
(21) Application number: 20905628.2
(22) Date of filing: 21.10.2020
(51) Int. Cl.: H02J 7/00

(54) **CHARGER, DEVICE TO BE CHARGED, AND CHARGING SYSTEM**

(30) Priority: 25.12.2019 CN 201922421021 U
(71) Applicant: Spreadtrum Communications (Shenzhen) Co., Ltd., Shenzhen, Guangdong 518057 (CN)
(72) Inventor: REN, Qianshan, Shanghai 201203 (CN); LI, Changfei, Shanghai 201203 (CN)
(74) Representative: Nordmeyer, Philipp Werner
(86) International application number: PCT/CN2020/122391
(87) International publication number: WO 2021/129083

(57) **Abstract**

A charger, a device to be charged, and a charging system, the charger comprising: a power supply interface and a first charging contact surface; an input end of the power supply interface is coupled to a power source, and an output end thereof is coupled to the first charging contact surface; the output end of the power supply interface comprises a power source positive electrode output end and a ground output end; the first charging contact surface comprises a first closed loop and a second closed loop, the first closed loop and the second closed loop being arranged independently of one another; the first closed loop is coupled to the power source positive electrode output end of the power supply interface and the second closed loop is coupled to the ground output end of the power supply interface; and the first closed loop and the second closed loop are both provided with an exposed electrically conductive area. The present solution can conveniently implement smart device charging.

## Description

### CROSS-REFERENCE TO RELATED APPLICATIONS

This application claims priority to Chinese Patent Application No. 201922421021.1, filed on December 25, 2019, and entitled "CHARGER, DEVICE TO BE CHARGED, AND CHARGING SYSTEM", the entire disclosure of which is incorporated herein by reference.

### TECHNICAL FIELD

The present disclosure generally relates to electronic device technology field, and more particularly, to a charger, device to be charged, and charging system.

### BACKGROUND

Currently, smart devices such as smart phones, tablet computers, and smart watches have been widely used in daily life. Smart devices such as smart phones need to be charged frequently with larger display screens, more running applications and smaller battery capacity.

In an existing technology, smart devices usually use plug-in interfaces for charging or data transmission, which brings great inconvenience to users due to the direction of plug-in. Although wireless chargers exist at present, energy efficiency is relatively low and cost is relatively high. Therefore, there is a need for a charger, a device to be charged, and a charging system.

### SUMMARY

The technical problem solved by embodiments of the present disclosure is to simplify an operation while charging smart devices.

In an embodiment of the present disclosure, a charger is provided, including: a power interface and a first charging contact surface; wherein an input of the power interface is coupled with a power supply, an output of the power interface is coupled with the first charging contact surface; the output of the power interface includes a power supply positive output and a ground output; and the first charging contact surface includes a first closed loop and a second closed loop, wherein the first closed loop and the second closed loop are configured independently of each other, the first closed loop is coupled with the power supply positive output of the power interface, the second closed loop is coupled with the ground output of the power interface, and the first closed loop and the second closed loop are configured with bare conductive areas.

In some embodiment, the charger includes a charger base, and the first charging contact surface is configured on an outer surface of the charger base.

In some embodiment, the power interface further includes a negative voltage data output and a positive voltage data output.

In some embodiment, the first charging contact surface further includes: a third closed loop and a fourth closed loop, wherein the third closed loop, the fourth closed loop, the first closed loop and the second closed loop are configured independently of each other, the third closed loop is coupled with the positive voltage data output, the fourth closed loop is coupled with the negative voltage data output.

In some embodiment, the charger communicates with a device to be charged through the third closed loop and the fourth closed loop, the charger is adapted to receive power state information output by the device to be charged, and the charger further includes: a display circuitry, adapted to display current power percentage corresponding to the power status information.

In some embodiment, the first closed loop, the second closed loop, the third closed loop and the fourth closed loop are configured in nesting.

In some embodiment, the third closed loop includes a geometric loop, the fourth closed loop includes a geometric loop, the first closed loop includes a geometric loop, and the second closed loop includes a geometric loop.

In some embodiment, at least one of the first closed loop, the second closed loop, the third closed loop and the fourth closed loop satisfies that corresponding bare conductive area includes a probe, and the other areas are sealed.

In some embodiment, the charger further includes: a first fastening device, adapted to fasten the device to be charged during charging the device to be charged.

In some embodiment, the first fastening device is disposed in the charger.

In some embodiment, the first fastening device is configured in the charger.

In an embodiment of the present disclosure, a device to be charged is provided, including: the device to be charged is adapted to be charged by a charger as mentioned above, the device to be charged includes: a second charging contact surface and a charging interface; wherein the charging interface includes: a power supply positive input, a ground input and an output, the output is adapted to output electrical energy; and the second charging contact surface includes a fifth closed loop and a sixth closed loop, wherein the fifth closed loop and the sixth closed loop are configured independently of each other, the fifth closed loop is coupled with the power supply positive input, the sixth closed loop is coupled with the ground input, and the fifth closed loop and the sixth closed loop are configured with bare conductive areas; when charging, the bare conductive area on the fifth closed loop is coupled with the bare conductive area on the first closed loop, and the bare conductive area on the sixth closed loop is coupled with the bare conductive area on the second closed loop.

In some embodiment, the second charging contact surface is configured on a back of a case of the device to be charged.

In some embodiment, the charging interface further includes a negative voltage data input and a positive voltage data input.

In some embodiment, the second charging contact surface further includes: a seventh closed loop and an eighth closed loop, wherein the fifth closed loop, the sixth closed loop, the seventh closed loop and the eighth closed loop are configured independently of each other, the seventh closed loop is coupled with the positive voltage data input, the eighth closed loop is coupled with the negative voltage data input.

In some embodiment, the fifth closed loop, the sixth closed loop, the seventh closed loop and the eighth closed loop are configured in nesting.

In some embodiment, the seventh closed loop includes a geometric loop, the eighth closed loop includes a geometric loop, the fifth closed loop includes a geometric loop, and the sixth closed loop includes a geometric loop.

In some embodiment, at least one of the fifth closed loop, the sixth closed loop, the seventh closed loop and the eighth closed loop satisfies that corresponding bare conductive area includes a probe, and the other areas are sealed.

In some embodiment, the device to be charged further includes: a second fastening device, adapted to be fastened on the charger during charging.

In some embodiment, the second fastening device is configured in a case of the device to be charged.

In some embodiment, the second fastening device includes a magnetic device.

In an embodiment of the present disclosure, a charging system is provided, including: a charger as mentioned above and a device to be charged as mentioned above.

Embodiments of the present disclosure have following benefits.

A charger includes a first charging contact surface, the first charging contact surface includes a first closed loop and a second closed loop, and the first closed loop and the second closed loop are configured with bare conductive areas. When charging, a charging interface of a device to be charged can be placed on the first charging contact surface to realize charging, so that the device to be charged can be charged conveniently.

Further, the power interface also include a positive voltage data output and a negative voltage data output, which may transmit data to the device to be charged while charging the device to be charged.

Further, by configuring a corresponding bare conductive area corresponding to at least one of the first closed loop, the second closed loop, a third closed loop and a fourth closed loop to be a probe and to seal other areas, waterproof performance of the charger may be improved.

In addition, the charger also includes a display circuitry which is adapted to display current power percentage of the device to be charged in real time, users may know a current battery percentage of the device to be charged without unlocking the device to be charged.

### BRIEF DESCRIPTION OF THE DRAWINGS

FIG. 1 schematically illustrates a structure diagram of a charger according to an embodiment of the present disclosure;
FIG. 2 schematically illustrates a structure diagram of a device to be charged according to an embodiment of the present disclosure; and
FIG. 3 schematically illustrates a structure diagram of a charging system according to an embodiment of the present disclosure.

### DETAILED DESCRIPTION

In an existing technology, smart devices usually use plug-in interfaces for charging or data transmission, which brings great inconveniences to users due to the direction of plug-in.

A charger includes a first charging contact surface, the first charging contact surface includes a first closed loop and a second closed loop, and the first closed loop and the second closed loop are configured with bare conductive areas. When charging, a charging interface of a device to be charged can be placed on the first charging contact surface to realize charging, so that the device to be charged can be charged conveniently.

In order to clarify the object, characteristic and advantages of embodiments of the present disclosure, the embodiments of present disclosure will be described clearly in detail in conjunction with accompanying drawings.

In the embodiment of the present disclosure, a charger is provided, including: a power interface and a first charging contact surface.

In a specific implementation, the power interface may include an input and an output, the input of the power interface may be coupled with a power supply. The power supply may be a city electricity 220 V mains, or a device capable of outputting electrical energy, such as a storage cell or a lithium battery.

The output of the power interface may be coupled with the first charging contact surface; the output of the power interface may include a power supply positive output and a ground output. For those skilled in the art, the power interface usually includes two wires, corresponding to two outputs respectively, that is, the power supply positive output and the ground output as mentioned above, and basic power supply function may be realized through the above-mentioned two outputs.

In a specific implementation, the first charging contact surface may include a first closed loop and a second closed loop, the first closed loop and the second closed loop are configured independently of each other, the first closed loop is coupled with the power supply positive output of the power interface, the second closed loop is coupled with the ground output of the power interface. On the first closed loop, a bare conductive area is configured; correspondingly, on the second closed loop, a bare conductive area is also configured.

In a specific implementation, the bare conductive area of the first closed loop may be a contact spring pin, a probe or a bare wire. Correspondingly, the bare conductive area of the second closed loop may be a contact spring pin, a probe or a bare wire.

In embodiments of the present disclosure, the first closed loop and the second closed loop may be geometric loops. The geometric loop may be a rectangular loop, a circular loop, an elliptical loop, or the like. A shape of the first closed loop and a shape of the second closed loop may be same or different. For an aesthetic point of view, the shape of the first closed loop may be configured to be the same as the shape of the second closed loop.

In embodiments of the present disclosure, the first closed loop and the second closed loop are configured independently of each other, that is, the first closed loop and the second closed loop do not intersect each other. For example, the first closed loop and the second closed loop are configured independently of each other, the first closed loop is configured in a first area, the second closed loop is configured in a second area, and the first area and the second area do not have an intersection.

For another example, the first closed loop and the second closed loop are both annular, and form concentric circles, the first closed loop is in an inner part, and the second closed loop is in an outer part.

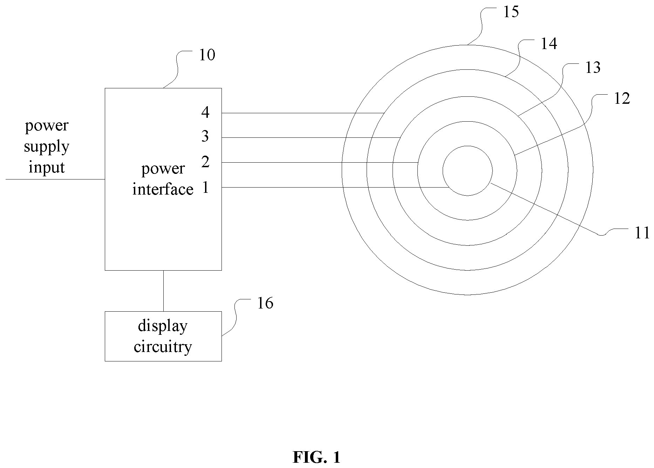

Referring to FIG.1, a structure diagram of a charger according to an embodiment of the present disclosure is provided schematically. In FIG. 1, a power supply is input to a power interface 10. A power supply positive output 1 of the power interface 10 is coupled with a first closed loop 11, a ground output of the power interface 10 is coupled with a second closed loop 12, and the first closed loop 11 and the second closed loop 12 form concentric circles.

In a specific implementation, the charger includes a charger base, and the first charging contact surface is configured on an outer surface of the charger base. The charger includes a charging plug, a charging cord and a charger base. The charging plug is a power interface, the charging plug and the charger base are connected through the charging cord, and the charger base is in a shape of disc.

In a specific implementation, the power interface may also include a negative voltage data output and a positive voltage data output. The negative voltage data output and the positive voltage data output may realize data communication with the device to be charged while charging the device to be charged.

In embodiments of the present disclosure, the first charging contact surface may also include: a third closed loop and a fourth closed loop. The third closed loop is coupled with the positive voltage data output, the fourth closed loop is coupled with the negative voltage data output.

The third closed loop and the fourth closed loop are configured independently of each other. Specifically, the third closed loop and the fourth closed loop being configured independently of each other refers to the above-mentioned definition of that the first closed loop and the second closed loop being configured independently of each other, which is not repeated here.

The third closed loop, the fourth closed loop, the first closed loop and the second closed loop are configured independently of each other. That is, four closed loops, the first closed loop, the second closed loop, the third closed loop and the fourth closed loop are configured independently of each other. The first closed loop, the second closed loop, the third closed loop and the fourth closed loop are configured in nesting.

In embodiments of the present disclosure, the third closed loop may be geometric loops, and the fourth closed loop may be a geometric loop. The geometric loop may be a rectangular loop, a circular loop, an elliptical loop, or the like. A shape of the third closed loop and a shape of the fourth closed loop may be same or different. For an aesthetic point of view, the shape of the third closed loop may be configured to be the same as the shape of the fourth closed loop.

Continuing to refer to FIG. 1, a positive voltage data output 3 of the power interface 10 is coupled with the third closed loop 13, a negative voltage data output 4 of the power interface 10 is coupled with the fourth closed loop 14. The first closed loop 11, the second closed loop 12, the third closed loop 13 and the fourth closed loop 14 form concentric circles.

In a specific implementation, the power interface 10 may be a USB interface. The power interface 10 may also be other types of interfaces capable of simultaneously performing power supply and data communication.

In a specific implementation, a position of the bare conductive area corresponding to the first closed loop may be configured according to an actual application scenario. Correspondingly, a position of the bare conductive area corresponding to the second closed loop may be configured according to an actual application scenario. A position of the bare conductive area corresponding to the third closed loop may be configured according to an actual application scenario. A position of the bare conductive area corresponding to the fourth closed loop may be configured according to an actual application scenario.

In a specific implementation, a position of the bare conductive area corresponding to the first closed loop may be a probe, and other areas of the first closed loop are sealed, for example, injection sealed, rubber sealed or the like. That is, in the first closed loop, only the probe is bare. Through the above sealing measures, waterproof performance of the charger may be improved.

Correspondingly, a bare conductive area corresponding to at least one of the second closed loop, the third closed loop and the fourth closed loop may be a probe, and the other areas are sealed.

In a specific implementation, the charger may include a first fastening device. By configuring the first fastening device, the device to be charged may be fixed when the device to be charged is charged, thereby preventing the device to be charged from falling off the charger. In addition, by configuring the first fastening device, the device to be charged may be placed on the charger more conveniently.

In embodiments of the present disclosure, the first fastening device is configured in the charger. The first fastening device may be a magnetic device. For example, the first fastening device is a magnet. A magnet may be correspondingly configured on the device to be charged if the first fastening device is a magnet. When charging, a user may bring the device to be charged close to the charger. Under an action of magnetic force, the device to be charged may be attracted onto the charger, so that the user does not need to manually connect the charging interface of the device to be charged to the power interface of the charger.

In a specific implementation, the charger may include a display circuitry; the display circuitry of the charger may be configured on the outer surface of the charger, or may be configured in the charger.

The charger may perform data communication with the device to be charged through the third closed loop and the fourth closed loop. Referring to FIG. 1, the display circuitry 16 may be coupled with the power interface 10.

In a specific implementation, during the charging process of the device to be charged, current power status information may be output to the charger in real time. After receiving the power status information, the charger may display a current power percentage of the device to be charged through the display circuitry, so that a user may intuitively know the current power percentage of the device to be charged on the charger without checking the device to be charged. The display circuitry may be a liquid crystal display screen or an LED display screen or the like.

The charger may also include a control circuitry and a reminder circuitry, the control circuitry and the reminder circuitry may be configured in the charger. The control circuitry is coupled with the power interface, and is adapted to receive power state information output by the device to be charged. After learning that the current power percentage of the device to be charged reaches a preset value, such as 100%, the control circuitry may control the charger to stop charging the device to be charged and output a reminder command to the reminder circuitry. After receiving the reminder command, the reminder circuitry may perform a corresponding reminding operation. For example, if the reminder circuitry is a speaker, after receiving the reminder command, the reminder circuitry may output a voice of "current charging is complete" to remind the user that the device to be charged has finished charging.

It can be understood that the reminder circuitry may also be a device such as an LED light, as long as it can complete the reminding operation to the user after receiving the reminder command, which is not repeated here.

In a specific implementation, an outer ring may also be configured on the first charging contact surface. The outer ring may be made of a plastic material. Referring to FIG. 1, an outer ring 15 is configured on the first charging contact surface.

It can be seen from the above, according to embodiments of the present disclosure, a charger includes a first charging contact surface, the first charging contact surface includes a first closed loop and a second closed loop, and the first closed loop and the second closed loop are configured with bare conductive areas. When charging, a charging interface of a device to be charged can be placed on the first charging contact surface to realize charging, so that the device to be charged can be charged conveniently.

In an embodiment of the present disclosure, a device to be charged is provided, which is adapted to be charged by the charger provided in the above embodiments. The device to be charged provided by the embodiment of the present disclosure is described in detail below.

In a specific implementation, the device to be charged may include a second charging contact surface and a charging interface. The charging interface may include an input and an output. The input may include a power supply positive input and a ground input, and the output of the charging interface may be adapted to output electrical energy.

For those skilled in the art, the charging interface usually includes two lines, corresponding to two inputs respectively, that is, the power supply positive input and the ground input mentioned above, and basic charging function may be realized through the above-mentioned two inputs.

In a specific implementation, the second charging contact surface may include a fifth closed loop and a sixth closed loop, and the fifth closed loop and the sixth closed loop are configured independently of each other. The fifth closed loop is coupled with the power supply positive input of the charging interface, the sixth closed loop is coupled with the ground input of the charging interface. On the fifth closed loop, a bare conductive area is configured; and on the sixth closed loop, a bare conductive area is also configured.

When charging, the bare conductive area on the fifth closed loop of the device to be charged is coupled with the bare conductive area on the first closed loop of the charger, and the bare conductive area on the sixth closed loop of the device to be charged is coupled with the bare conductive area of the second closed loop of the charger. That is, when charging, the power supply positive input of the device to be charged is coupled with the power supply positive output of the charger, the ground input of the device to be charged is coupled with the ground output of the charger.

In a specific implementation, the bare conductive area of the fifth closed loop may be a contact spring pin, a probe, or a bare wire. Correspondingly, the bare conductive area of the sixth closed loop may be a contact spring pin, a probe, or a bare wire.

In embodiments of the present disclosure, the fifth closed loop and the sixth closed loop may be geometric loops. The geometric loop may be a rectangular loop, a circular loop, an elliptical loop, or the like. A shape of the fifth closed loop and a shape of the sixth closed loop may be same or different. For an aesthetic point of view, the shape of the fifth closed loop may be configured to be the same as the shape of the sixth closed loop.

In embodiments of the present disclosure, the fifth closed loop and the sixth closed loop are configured independently of each other, that is, the fifth closed loop and the sixth closed loop do not intersect each other. For example, the fifth closed loop and the sixth closed loop are configured independently of each other, the fifth closed loop is configured in a first area of the second charging contact surface, the sixth closed loop is configured in a second area of the second charging contact surface, and the fifth area and the sixth area do not have an intersection in the second charging contact surface.

For another example, the fifth closed loop and the sixth closed loop are both annular, and form concentric circles, the fifth closed loop is in an inner part, and the sixth closed loop is in an outer part.

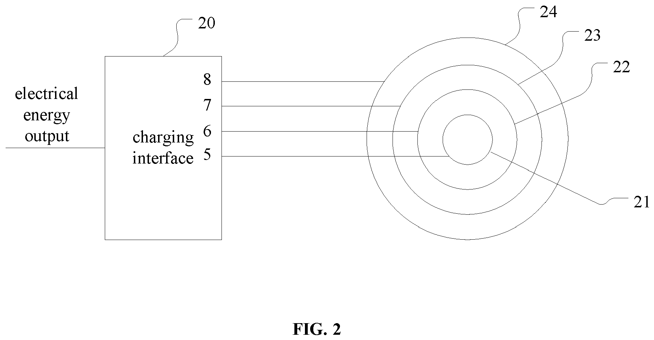

Referring to FIG.2, a structure diagram of a device to be charged according to an embodiment of the present disclosure is provided schematically. In FIG.2, a charging interface 20 is output electrical energy. A power supply positive input 5 of the charging interface 20 is coupled with a fifth closed loop 21, a ground input of the charging interface 20 is coupled with a sixth closed loop 22, and the fifth closed loop 21 and the sixth closed loop 22 form concentric circles.

In a specific implementation, the second charging contact surface maybe configured on a back of a case of the device to be charged. It can be understood that, the second charging contact surface may also be configured at other positions of the device to be charged.

In a specific implementation, the charging interface may also include a negative voltage data input and a positive voltage data input. The negative voltage data input and the positive voltage data input may realize data communication with the charger when the device to be charged is charged.

In embodiments of the present disclosure, the second charging contact surface may also include: a seventh closed loop and an eighth closed loop. The seventh closed loop is coupled with the positive voltage data input; the eighth closed loop is coupled with the negative voltage data input.

The seventh closed loop and the eighth closed loop are configured independently of each other. Specifically, the seventh closed loop and the eighth closed loop being configured independently of each other refers to the above-mentioned definition of that the fifth closed loop and the sixth closed loop being configured independently of each other, which is not repeated here.

The seventh closed loop, the eighth closed loop, the fifth closed loop and the sixth closed loop are configured independently of each other. That is, four closed loops, the fifth closed loop, the sixth closed loop, the seventh closed loop and the eighth closed loop are configured independently of each other. The fifth closed loop, the sixth closed loop, the seventh closed loop and the eighth closed loop are configured in nesting.

In embodiments of the present disclosure, the seventh closed loop and the eighth closed loop may be geometric loops. The geometric loop may be a rectangular loop, a circular loop, an elliptical loop, or the like. A shape of the seventh closed loop and a shape of the eighth closed loop may be same or different. For an aesthetic point of view, the shape of the seventh closed loop may be configured to be the same as the shape of the eighth closed loop.

Continuing to refer to FIG.2, a positive voltage data input 7 of the charging interface 20 is coupled with the seventh closed loop 23, a negative voltage data input 8 of the charging interface 20 is coupled with the eighth closed loop 24. The fifth closed loop 21, the sixth closed loop 22, the seventh closed loop 23 and the eighth closed loop 24 form concentric circles.

In a specific implementation, the charging interface 20 may be a USB interface. The charging interface 20 may also be other types of interfaces capable of simultaneously performing power supply and data communication.

In a specific implementation, a position of the bare conductive area corresponding to the fifth closed loop may be configured according to an actual application scenario. Correspondingly, a position of the bare conductive area corresponding to the sixth closed loop may be configured according to an actual application scenario. A position of the bare conductive area corresponding to the seventh closed loop may be configured according to an actual application scenario. A position of the bare conductive area corresponding to the eighth closed loop may be configured according to an actual application scenario.

In a specific implementation, a position of the bare conductive area corresponding to the fifth closed loop may be a probe, and other areas of the fifth closed loop are sealed, for example, injection sealed, rubber sealed or the like. That is, in the fifth closed loop, only the probe is bare. Through the above sealing measures, waterproof performance of the charger may be improved.

Correspondingly, a bare conductive area corresponding to at least one of the sixth closed loop, the seventh closed loop and the eighth closed loop may be a probe, and the other areas are sealed.

In a specific implementation, the device to be charged may include a second fastening device. By configuring the second fastening device, the device to be charged may be fixed when the device to be charged is charged, thereby preventing the device to be charged from falling off the charger. In addition, by configuring the second fastening device, the device to be charged may be placed on the charger more conveniently.

In embodiments of the present disclosure, the second fastening device is configured in the case of the charger. The second fastening device may be a magnetic device. For example, the second fastening device is a magnet. A magnet may be correspondingly configured on the device to be charged if the second fastening device is a magnet. When charging, a user may bring the device to be charged close to the charger. Under an action of magnetic force, the device to be charged may be attracted onto the charger, so that the user does not need to manually connect the charging interface of the device to be charged to the power interface of the charger.

In a specific implementation, combined with FIG. 1 and FIG. 2, the first fastening device may be configured in the first closed loop 11, the second fastening device may be configured in the fifth closed loop 21, and a specific position of the first fastening device corresponds to a specific position of the second fastening device. When the first fastening device and the second fastening device are magnets, after the first fastening device and the second fastening device are adsorbed, the bare conductive area on the first closed loop 11 is in contact with the bare conductive area on the fifth closed loop 21, the bare conductive area on the second closed loop 12 is in contact with the bare conductive area on the sixth closed loop 22, the bare conductive area on the third closed loop 13 is in contact with the bare conductive area on the seventh closed loop 23, the bare conductive area on the fourth closed loop 14 is in contact with the bare conductive area on the eighth closed loop 24.

In a specific implementation, the first fastening device and the second fastening device may also be other types of devices capable of fastening, and the position of the first fastening device on the charger is configured corresponding to the position of the second fastening device on the device to be charged.

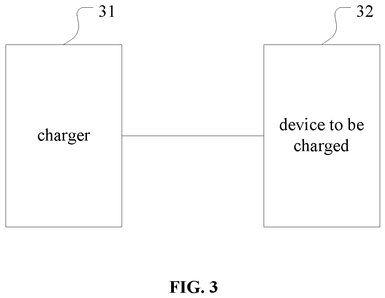

Referring to FIG. 3, FIG. 3 schematically illustrates a structure diagram of a charging system according to an embodiment of the present disclosure. In FIG. 3, the charging system includes a charger 31 and a device to be charged 32, the charger 31 is the charger provided in the above embodiments, and the device to be charged 32 is the device to be charged provided in the above embodiments. Specifically, specific structure and working principle of the charger 31 and the device to be charged 32 may be referred to the above-mentioned embodiments, which are not repeated here.

Although the present disclosure is disclosed as above, the present disclosure is not limited to this. Those skilled in the art can make various changes and modifications without departing from the spirit and scope of the present disclosure. Therefore, the protection scope of the present disclosure should be subject to the scope defined by the claims.

## Claims

1. A charger, **characterized by** comprising: a power interface and a first charging contact surface,
wherein an input of the power interface is coupled with a power supply, an output of the power interface is coupled with the first charging contact surface; the output of the power interface comprises a power supply positive output and a ground output; and
the first charging contact surface comprises a first closed loop and a second closed loop, wherein the first closed loop and the second closed loop are configured independently of each other, the first closed loop is coupled with the power supply positive output of the power interface, the second closed loop is coupled with the ground output of the power interface, and the first closed loop and the second closed loop are configured with bare conductive areas.

2. The charger according to claim 1, **characterized in that** the charger comprises a charger base, and the first charging contact surface is configured on an outer surface of the charger base.

3. The charger according to claim 1, **characterized in that** the power interface further comprises a negative voltage data output and a positive voltage data output.

4. The charger according to claim 3, **characterized in that** the first charging contact surface further comprises: a third closed loop and a fourth closed loop, wherein the third closed loop, the fourth closed loop, the first closed loop and the second closed loop are configured independently of each other, the third closed loop is coupled with the positive voltage data output, the fourth closed loop is coupled with the negative voltage data output.

5. The charger according to claim 4, **characterized in that** the first closed loop, the second closed loop, the third closed loop and the fourth closed loop are configured in nesting.

6. The charger according to claim 4, **characterized in that** the third closed loop comprises a geometric loop, the fourth closed loop comprises a geometric loop, the first closed loop comprises a geometric loop, and the second closed loop comprises a geometric loop.

7. The charger according to claim 4, **characterized in that** the charger communicates with a device to be charged through the third closed loop and the fourth closed loop, the charger is adapted to receive power state information output by the device to be charged, and the charger further comprises: a display circuitry, adapted to display current power percentage corresponding to the power status information.

8. The charger according to any one of claims 4 to 7, **characterized in that** at least one of the first closed loop, the second closed loop, the third closed loop and the fourth closed loop satisfies that corresponding bare conductive area comprises a probe, and the other areas are sealed.

9. The charger according to claim 1, **characterized by** further comprising:
a first fastening device, adapted to fasten the device to be charged during charging the device to be charged.

10. The charger according to claim 9, **characterized in that** the first fastening device is disposed in the charger.

11. The charger according to claim 10, **characterized in that** the first fastening device is configured in the charger.

12. A device to be charged, **characterized by** comprising:
the device to be charged is adapted to be charged by a charger according to any one of claims 1 to 11, the device to be charged comprises: a second charging contact surface and a charging interface; wherein
the charging interface comprises: a power supply positive input, a ground input and an output, the output is adapted to output electrical energy; and
the second charging contact surface comprises a fifth closed loop and a sixth closed loop, wherein the fifth closed loop and the sixth closed loop are configured independently of each other, the fifth closed loop is coupled with the power supply positive input, the sixth closed loop is coupled with the ground input, and the fifth closed loop and the sixth closed loop are configured with bare conductive areas; when charging, the bare conductive area on the fifth closed loop is coupled with the bare conductive area on the first closed loop, and the bare conductive area on the sixth closed loop is coupled with the bare conductive area on the second closed loop.

13. The device to be charged according to claim 12, **characterized in that** the second charging contact surface is configured on a back of a case of the device to be charged.

14. The device to be charged according to claim 12, **characterized in that** the charging interface further comprises a negative voltage data input and a positive voltage data input.

15. The device to be charged according to claim 14, **characterized in that** the second charging contact surface further comprises: a seventh closed loop and an eighth closed loop, wherein the fifth closed loop, the sixth closed loop, the seventh closed loop and the eighth closed loop are configured independently of each other, the seventh closed loop is coupled with the positive voltage data input, the eighth closed loop is coupled with the negative voltage data input.

16. The device to be charged according to claim 15, **characterized in that** the fifth closed loop, the sixth closed loop, the seventh closed loop and the eighth closed loop are configured in nesting.

17. The device to be charged according to claim 15, **characterized in that** the seventh closed loop comprises a geometric loop, the eighth closed loop comprises a geometric loop, the fifth closed loop comprises a geometric loop, and the sixth closed loop comprises a geometric loop.

18. The device to be charged according to any one of claims 15 to 17, **characterized in that** at least one of the fifth closed loop, the sixth closed loop, the seventh closed loop and the eighth closed loop satisfies that corresponding bare conductive area comprises a probe, and the other areas are sealed.

19. The device to be charged according to claim 12, **characterized by** further comprising:
a second fastening device, adapted to be fastened on the charger during charging.

20. The device to be charged according to claim 19, **characterized in that** the second fastening device is configured in a case of the device to be charged.

21. The device to be charged according to claim 20, **characterized in that** the second fastening device comprises a magnetic device.

22. A charging system, **characterized by** comprising: a charger according to any one of claims 1 to 11, and a device to be charged according to any one of claims 12 to 21.
